# EUROPEAN PATENT APPLICATION

(11) **EP 3 239 954 A1**
(43) Date de publication de la demande: **01.11.2017**
(21) Numéro de dépôt: 15872013.6
(22) Date de dépôt: 22.12.2015
(51) Int. Cl.: G08G 1/123

(54) **PROCÉDÉ ET SYSTÈME DE FOURNITURE DE SERVICES DE TAXI BASÉS SUR LA LOCALISATION DE L'UTILISATEUR ET DU VÉHICULE**

(30) Priorité: 22.12.2014 ES 201401032
(71) Demandeur: IDX Informática, S.L., 08036 Barcelona (ES)
(72) Inventeur: RAMÓN MORA, Jaime, 08036 Barcelona (ES); LLOR GARCIA, Juan Emilio, 08036 Barcelona (ES)
(74) Mandataire: Toro Gordillo, Ignacio Maria
(86) Numéro de dépôt international: PCT/ES2015/070938
(87) Numéro de publication internationale: WO 2016/102732

(57) **Abrégé**

Procédé et système pour fournir des services de taxi ou de location de véhicules avec chauffeur, consistant à afficher la localisation de l'un et de l'autre sur une carte interactive ainsi que le numéro de téléphone mobile du chauffeur pour que l'utilisateur puisse directement l'appeler sans l'intervention de tiers.

## Description

### Objet de l'invention

L'invention fait référence à un procédé et à un système pour que l'utilisateur puisse localiser en temps réel les taxis les plus proches et pour qu'il puisse communiquer avec le chauffeur de n'importe lequel d'entre eux à cet instant, en effectuant un appel téléphonique, en envoyant un message ou à travers n'importe quel procédé où intervient le téléphone du chauffeur de taxi pour ainsi faire appel à ses services.

### Antécédents de l'invention

Depuis l'origine du service, pour faire appel à un taxi, un utilisateur a toujours levé la main pour arrêter le véhicule, dans la mesure où celui-ci et le chauffeur de taxi peuvent se voir mutuellement et directement. Ce système simple s'applique toujours dans l'actualité. Néanmoins, ce système traditionnel ne peut pas être pratiqué lorsque l'utilisateur ne voit aucun taxi de libre.

Pour remédier à cet inconvénient du champ de vision, et pouvoir faire appel au service de taxi dans de tels cas, les procédés actuels impliquent toujours l'intervention d'une centrale de communications (call-center) dans laquelle une tierce personne reçoit la demande par téléphone, elle effectue un appel téléphonique ou par radio pour contacter l'un des chauffeurs de taxi affiliés à son organisation (qui n'est pas toujours forcément le taxi le plus proche du demandeur) et, finalement, envoie le taxi à l'adresse indiquée par l'utilisateur, il s'agit donc d'un système onéreux, qui fait perdre beaucoup de temps et qui utilise des intermédiaires qui ne comprennent pas toujours bien les indications.

Les procédés existant dans l'actualité pour remédier à l'inconvénient du champ de vision obligent à communiquer avec un call-center qui a besoin d'avoir beaucoup d'opérateurs en ligne. D'autres procédés permettent également de réserver un taxi via un site web, mais en indiquant toujours au système ce dont a besoin le client, et en attendant que le système lui envoie un taxi.

Les inconvénients des procédés actuels sont donc nombreux :
- L'utilisateur doit s'enregistrer dans le système pour pouvoir réserver un taxi, le service ne peut donc pas être anonyme.
- Si l'utilisateur ne s'enregistre pas dans le système du call-center il ne peut pas réserver un taxi dans l'immédiat (ni à aucun moment). Cela signifie que si l'utilisateur a une urgence de service, les systèmes automatisés actuels ne lui servent pas à la vitesse adaptée.
- Les systèmes actuels ne permettent pas à l'utilisateur de parler directement avec le chauffeur de taxi, et s'ils le permettaient cela serait au deuxième appel.
- L'utilisateur ne peut pas réellement savoir si le chauffeur de taxi que lui a assigné le call-center est le plus proche auquel il aurait pu accéder.
- Les call-center ne peuvent pas offrir leurs services dans n'importe quelle ville du monde et du fait que ces systèmes actuels sont centralisés, ils obligent l'utilisateur à interagir avec le système, ils sont donc toujours limités par la zone géographique, puisque si le client et le système (call-center ou serveur automatisé) doivent établir une communication dans la réservation du taxi, et que des milliers de kilomètres les éloignent, les appels téléphoniques seraient internationaux.

On connaît par exemple le brevet US2009/0313077, qui, bien qu'il prévoie que le client se mette en contact téléphonique avec le chauffeur de taxi, c'est toujours par l'intermédiaire d'un « call-center » ou centre d'appels et/ou de contrôle d'un tiers, de sorte que le numéro de téléphone du chauffeur est toujours omis et que l'on met beaucoup de temps à établir la communication finale de l'utilisateur avec le chauffeur de taxi.

### Description de l'invention

La principale caractéristique de ce système, et sa principale nouveauté et amélioration par rapport à ceux existant sur le marché réside dans le fait qu'il offre à l'utilisateur, simultanément, la position des taxis libres dans leur environnement et le numéro de téléphone du chauffeur de taxi pour que n'importe quel utilisateur, immédiatement et sans collaboration de tiers, puisse directement l'appeler et parler avec lui pour qu'il vienne le chercher, ce qui suppose un gain de temps très important par rapport aux systèmes conventionnels connus.

L'utilisateur pourra voir à l'écran de son smartphone le numéro de téléphone des chauffeurs de taxi les plus proches de son environnement étant libres à ce moment. Ainsi, l'utilisateur pourra directement appeler, en appuyant sur le numéro qui s'affiche sur l'icône du chauffeur de taxi, n'importe quel chauffeur de taxi et obtenir sa réponse de confirmation et le temps estimé, sans passer par aucun intermédiaire, et sans avoir à dépendre de la décision d'aucun opérateur pour sélectionner un chauffeur de taxi ou un autre pour son service.

Ce système présente comme avantage le fait que les opérateurs ne sont pas nécessaires, étant donné que personne n'a à prendre la décision de sélectionner le taxi, puisque le propre utilisateur le sélectionne. Cela suppose que les frais sont infimes, et que les chauffeurs de taxi qui sont associés à ce service pourront en profiter de façon beaucoup plus économique que les services actuels qui ont des frais plus importants.

Étant donné que les seuls appels téléphoniques qui sont effectués sont ceux que les utilisateurs effectuent aux chauffeurs de taxi, ce service est mondial, et n'a besoin d'aucun centre de distribution de services. N'importe quel chauffeur de taxi de n'importe quelle partie du monde pourra s'enregistrer dans le service, payer les frais par carte bancaire ou autre moyen de paiement connu ou futur, et commencer à fonctionner immédiatement.

Ainsi, **le procédé** pour fournir des services de taxi, basés sur la localisation de l'utilisateur et du véhicule, comprend les étapes suivantes.
- Connexion de l'utilisateur à un site web, d'accès public, à travers lequel il envoie automatiquement un profil de recherche de l'emplacement géographique dudit utilisateur en particulier, obtenu à partir de son propre dispositif mobile, ou sélectionné manuellement par le propre utilisateur sur une carte, pour que ledit site repère et sélectionne sur une carte la zone où se trouve l'utilisateur et représente sur ladite carte la localisation des taxis libres présents sur cette dernière à cet instant.
- Obtenir des informations des différents taxis libres existant dans la zone, au moins relatives à leur disponibilité et au numéro de téléphone mobile de leurs conducteurs respectifs.
- Établir une communication avec le chauffeur de taxi, apte à établir une demande de service et, le cas échéant, fournir au chauffeur de taxi les coordonnées dans lesquelles se trouve ledit utilisateur à cet instant, permettant de le récupérer à son emplacement.

**Le système** nécessite les dispositifs suivants :
a) Le chauffeur de taxi devra disposer d'un dispositif localisateur, une connexion à internet et une connexion téléphonique. Un smartphone réunit tous les critères du système.
b) L'utilisateur doit disposer d'un moyen de connexion à internet pour consulter le site web dans lequel se trouvent les chauffeurs de taxi qui circulent dans une zone, et une connexion téléphonique pour établir une connexion avec le chauffeur de taxi sélectionné. Un smartphone réunit également les critères exigés par le système pour appuyer l'utilisateur, ainsi qu'un pc ou similaire.
c) Le chauffeur de taxi a dû préalablement s'enregistrer dans le service des prestations universelles à travers un site web, et a dû donner son numéro de téléphone, outre d'autres données, qui sont stockées dans une base de données installée dans le propre serveur web qui appuie ledit site.
d) L'utilisateur n'a pas besoin de s'enregistrer dans aucun endroit, et peut rester totalement dans l'anonymat.

Les avantages que ce système apporte sont les suivants :
- Information à l'utilisateur des taxis libres de son environnement, peu importe lequel.
   a) Il permet la prise de décisions en temps réel avec un temps d'exécution très inférieur.
   b) Service universel (l'utilisateur obtient le même service dans le monde entier)
- Une plus grande rapidité dans l'obtention du taxi.
   a) On fait appel au plus proche ou à celui qui convient le mieux.
- Moins cher
   a) Sans intermédiaires
   b) Appel local et direct
- Ce système est universel. Il ne se limite pas à une zone, puisque lorsque l'on n'utilise pas un call-center n'importe quel chauffeur de taxi peut s'enregistrer depuis n'importe quel endroit du monde et, n'importe quel utilisateur, dans n'importe quel endroit du monde pourra voir dans son mobile les taxis libres les plus proches de son emplacement et communiquer avec ces derniers.

### Description des figures

Pour compléter la description qui est en train d'être réalisée et dans l'objet de faciliter la compréhension des caractéristiques de l'invention, un jeu de dessins est accompagné au présent mémoire descriptif dans lesquels, à caractère illustratif et non limitatif il a été représenté ce qui suit :

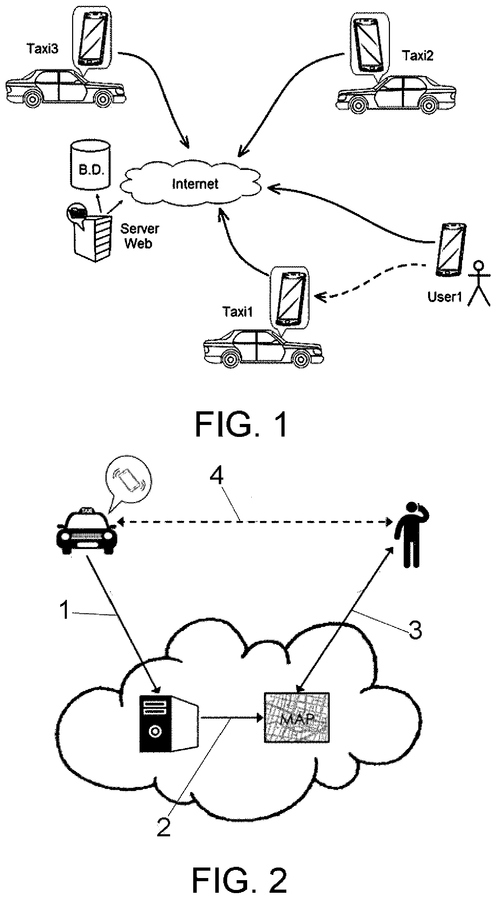

La figure 1.- Elle montre un schéma de fonctionnement du système de l'invention.
La figure 2.- Elle montre un diagramme de base du fonctionnement du système de l'invention, dans lequel en premier lieu, le chauffeur de taxi s'enregistre dans le système (il paie), après quoi le système enregistre le chauffeur de taxi sur la carte, de sorte que l'utilisateur consulte la carte et sélectionne le taxi qui lui convient puis ledit utilisateur appelle directement le chauffeur de taxi, sans que personne ne contrôle l'appel.

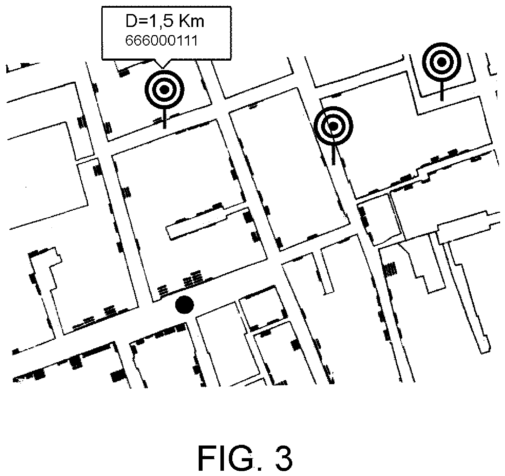

La figure 3.- Elle montre un exemple de l'interface du programme, dans lequel sur une carte des proximités dans lesquelles se trouve l'utilisateur une série d'icônes correspondant à la position de chaque chauffeur de taxi en temps réel sont représentées, icônes tactiles et moyennant lesquelles on accède aux informations/numéro de téléphone dudit taxi.

### Réalisation préférée de l'invention

**Le système** pour fournir des services de taxi, basés sur la localisation de l'utilisateur et du véhicule, tel que l'on peut observer sur le schéma annexé, comprend les unités ou dispositifs suivants :
- Un terminal d'utilisateur (User1), capable de se connecter à travers internet avec un site web d'accès public, à travers lequel il envoie un profil de recherche de son emplacement géographique à cet instant obtenu à partir du propre terminal de l'utilisateur sur une carte. Ce terminal d'utilisateur et le moyen de communication de ce dernier consistant, de préférence, en un smartphone, ou téléphone intelligent ayant la capacité de se connecter à internet et GPS incorporé.
- Un serveur web (Server Web), pourvu d'une application qui permet la géolocalisation des divers dispositifs mobiles correspondant aux taxis affiliés au service (Taxi1, Taxi2, ...) et leur représentation graphique sur une carte, à la disposition de n'importe quel utilisateur qui accède au site web existant, sur ledit serveur, ainsi qu'une base de données (B.D.) qui comporte, au moins, le moyen de communication avec chacun des taxis enregistrés dans cette dernière et, donc, affiliés au service.
- Un terminal GPS placé dans chaque taxi affilié à ce service, et un moyen de communication avec le chauffeur de taxi, consistant de préférence en un smartphone qui intègre les deux systèmes de communication. Ainsi il a été prévu que le terminal du chauffeur de taxi incorpore une application apte à détecter et à informer si le taxi est libre ou occupé, actionnée manuellement ou à travers le taximètre du véhicule.
- Un moyen de communication de l'utilisateur (User1), apte à établir une possible demande de service au chauffeur de taxi sélectionné, et, le cas échéant, capable de fournir au chauffeur de taxi les coordonnées permettant la localisation dudit utilisateur à cet instant, lui permettant de le récupérer à son emplacement.

La base de données (B.D.) montée sur le propre serveur web, ou sur un autre serveur, comporte les informations que le chauffeur de taxi a fourni au moment de s'enregistrer dans le système.

Lorsque l'utilisateur veut réserver un taxi, il lui suffit d'accéder au site web en question et il verra les taxis les plus proches de sa position de façon automatique s'il a un GPS, dans le cas contraire il devra sélectionner la zone où il se trouve à cet instant sur la carte. En tout état de cause, il pourra voir les taxis libres enregistrés dans le système et qui, à ce moment, circulent dans la zone où il se trouve.

En appuyant sur celui qui lui convient le mieux, il pourra voir son numéro de téléphone, et effectuer directement un appel au chauffeur, ou lui envoyer un message, pour lui dire de venir le récupérer.

## Revendications

1. Procédé pour fournir des services de taxi basés sur la localisation de l'utilisateur et du véhicule, qui comprend les étapes de :
• connexion de l'utilisateur à un site web, d'accès public, à travers lequel il envoie automatiquement un profil de recherche de l'emplacement géographique dudit utilisateur en particulier, obtenu à partir de son propre dispositif mobile, ou sélectionné manuellement par le propre utilisateur sur une carte comportant, ledit site, une carte de la zone dans laquelle se trouve l'utilisateur, dans laquelle est représentée la position dans laquelle sont localisés les taxis libres présents dans la même zone à cet instant.
• obtenir des informations des différents taxis libres existant dans la zone, au moins relatives à leur disponibilité et au numéro de téléphone mobile de leurs conducteurs respectifs.
• effectuer une communication directe avec le numéro de téléphone du chauffeur de taxi, apte à établir une demande de service, et, le cas échéant, fournir au chauffeur de taxi les coordonnées dans lesquelles se trouve ledit utilisateur à cet instant, lui permettant de le récupérer à son emplacement.

2. Procédé, selon la revendication 1, **caractérisé en ce qu'**il montre à l'écran de l'utilisateur le numéro de téléphone des chauffeurs de taxi de son environnement étant libres à ce moment.

3. Procédé, selon les revendications précédentes, **caractérisé en ce qu'**il permet de connaître les taxis libres qui se trouvent dans une zone déterminée en temps réel.

4. Système pour fournir des services de taxi, basés sur la localisation de l'utilisateur et du véhicule, qui comprend :
• un terminal d'utilisateur, capable de se connecter à travers internet avec un site web d'accès public, à travers lequel il envoie un profil de recherche de son emplacement géographique à cet instant, obtenu à partir du propre terminal de l'utilisateur, ou sélectionné manuellement par l'utilisateur sur une carte.
• un serveur web, pourvu d'une application qui permet la géolocalisation des divers dispositifs mobiles correspondant aux taxis libres affiliés au service et leur représentation graphique sur une carte, à la disposition de n'importe quel utilisateur qui accède au site web existant sur ledit serveur ; ainsi qu'une base de données qui comporte, au moins, le moyen de communication avec chacun des taxis affiliés au système ;
• un terminal GPS placé dans chaque taxi affilié à ce système ; et un moyen de communication avec le chauffeur de taxi, de préférence intégrés tous les deux dans un smartphone ;
• un moyen de communication de l'utilisateur, apte à établir une possible demande de service au chauffeur de taxi sélectionné ; et, le cas échéant, capable de fournir au chauffeur de taxi les coordonnées permettant la localisation de l'utilisateur à cet instant, lui permettant de le récupérer à son emplacement.

5. Système, selon la revendication 4, **caractérisé en ce que** le terminal de l'utilisateur et le moyen de communication de ce dernier, consistent en un smartphone, ou téléphone intelligent ayant la capacité de se connecter à internet et GPS incorporé.

6. Système, selon les revendications 4 et 5, **caractérisé en ce que** la base de données de taxis inclue dans le serveur web, comporte, en outre, des informations du chauffeur de taxi et/ou de son véhicule.

7. Système, selon les revendications 4 à 6, **caractérisé en ce que** le site web est associé à une base de données dans laquelle les chauffeurs de taxi sont enregistrés dans le service, et comportent leur profil et les caractéristiques de leur véhicule.

8. Système, selon les revendications 4 à 7, **caractérisé en ce que** le terminal du chauffeur de taxi incorpore une application apte à détecter et à informer si le taxi est libre ou occupé, actionnée manuellement ou à travers le taximètre du véhicule.
